# EUROPEAN PATENT SPECIFICATION

(11) **EP 2 710 654 B1**
(45) Date of publication and mention of the grant of the patent: **18.03.2015**
(21) Application number: 11723139.9
(22) Date of filing: 19.05.2011
(51) Int. Cl.: H01M 2/20, H01M 2/22, H01M 10/0525

(54) **CONNECTION ASSEMBLY FOR CELLS IN A BATTERY**
VERBINDUNGSANORDNUNG FÜR ZELLEN IN EINER BATTERIE
AGENCEMENT DE RACCORDEMENT DE CELLULES DANS UNE PILE

(43) Date of publication of application: 26.03.2014
(73) Proprietor: Super B B.V., 7554 TA Hengelo (NL)
(72) Inventor: DOORNEKAMP, Marinus Hendrikus, NL-7554 TA Hengelo (NL); ZILVOLD, Marten, Johan, NL-7554 TA Hengelo (NL)
(74) Representative: Nederlandsch Octrooibureau
(86) International application number: PCT/NL2011/050345
(87) International publication number: WO 2012/158020

(56) References cited:
- EP-A1- 2 339 688
- WO-A1-2010/141853
- JP-A- 2000 106 170
- US-A1- 2006 032 667
- US-A1- 2008 063 932

## Description

### Field of the invention

The present invention relates to a connection assembly for connecting two or more cells in a battery pack. In a further aspect, a method is provided for manufacturing a battery pack comprising two or more cells.

### Prior art

Battery packs comprising a plurality of cells are used in a wide variety of applications. In known battery packs, usually connection elements of strip like Nickel material are used to interconnect cells, as this material can be connected to the cell materials (steel or aluminum) without problems relating to safety.

International patent application WO 2010/141853 discloses a lithium ion battery pack comprising a housing, a top attached to an open end of the housing, and a plurality of battery cells arranged in parallel and contained in the housing. The battery pack further comprises cathode and anode current collectors, wherein each of the current collectors comprises a collector plate welded to a collector plate tab. The collector plate tabs are welded to the respective cathode and anode covers of the battery cells.

US patent application US 2008/063932 discloses a battery assembly comprising four unit cells in series. The unit cells are disposed in parallel such that their polarities are alternate. Adjacent unit cells are connected by a connection member, wherein the connection member is composed of a stacked metal plate obtained by resistance welding a copper and a nickel plate together.

Japanese patent application JP 2000 106170 discloses a connecting plate for electrically connecting a plurality of batteries. The connecting plate comprises a stacked arrangement of copper and nickel plates obtained by connecting said plates with a welding bead.

### Summary of the invention

The present invention seeks to provide an improved connection assembly for cells in a battery pack, which improves the characterizing parameters of a battery pack, such as internal resistance.

According to the present invention, a connection assembly according to the preamble defined above is provided, wherein the connection assembly comprises a first connector element of a first material and a second connector element of a second material, the first material having a lower resistivity than the second material, the first connector element and second connector element being electrically connected to each other by a low resistance connection. A battery pack using such a connection assembly can then be provided having a very low internal resistance, which improves performance of the battery pack.

According to a further aspect of the present invention a method as defined above is provided, wherein the method comprises providing a first connector element, providing at least one second connector element, the second connector element being provided with an aperture, first connecting the first connector element to the at least one second connector elements using a low resistance connection technique, and then connecting the apertures of the at least one second connector element to the two or more cells of the battery pack. The right materials for the various elements can be used for allowing easy and safe assembly of the entire battery pack, and simultaneously provide a battery pack having a very low internal resistance.

### Short description of drawings

The present invention will be discussed in more detail below, using a number of exemplary embodiments, with reference to the attached drawings, in which
Fig. 1 shows a perspective top view of a first embodiment of a connection assembly according to the present invention;
Fig. 2 shows a perspective bottom view of the connection assembly of the embodiment of Fig. 1 with connected cells;
Fig. 3 shows a perspective top view of a second embodiment of a connection assembly according to the present invention;
Fig. 4 shows a perspective bottom view of the connection assembly of the embodiment of Fig. 3 with connected cells;
Fig. 5 shows a perspective top view of a third embodiment of a connection assembly according to the present invention;
Fig. 6 shows a perspective bottom view of the connection assembly of the embodiment of Fig. 5 with connected cells.

### Detailed description of exemplary embodiments

Battery packs comprising a plurality of cells are more and more being used in all sorts of applications. The cells of a battery pack need to be connected to each other (in parallel or in series, or combinations of both) using a material with as low a resistivity as possible, in order to obtain as low as possible internal losses. The cells of modern type of batteries are e.g. Lithium based cells, such as Lithium Ion cells, Lithium Ion Polymer cells, LiFePO₄ cells, etc. These cells can deliver high currents (in the order of more than 100A) as a result of which internal losses can be substantial. The cells are usually provided with a casing of steel or aluminum to which the connecting material is electrically connected, using a variety of techniques such as (resistance) welding, soldering, gluing, bonding, etc.

The material of a cell casing and the materials used inside the cell pose strict requirements of possible connection techniques. The lithium material of the cells should be kept to below 60°. For connecting the cells, e.g. Ag or Cu material cannot be welded onto the casing as this involves too high a temperature. Due to the low resistance, resistance welding is mostly not possible, the welding currents would possibly flow into the cells and thus not heat the material. Laser welding changes the structure of the material, often resulting in semiconductor types of crystallization structures, which is also an unwanted effect in battery packs.

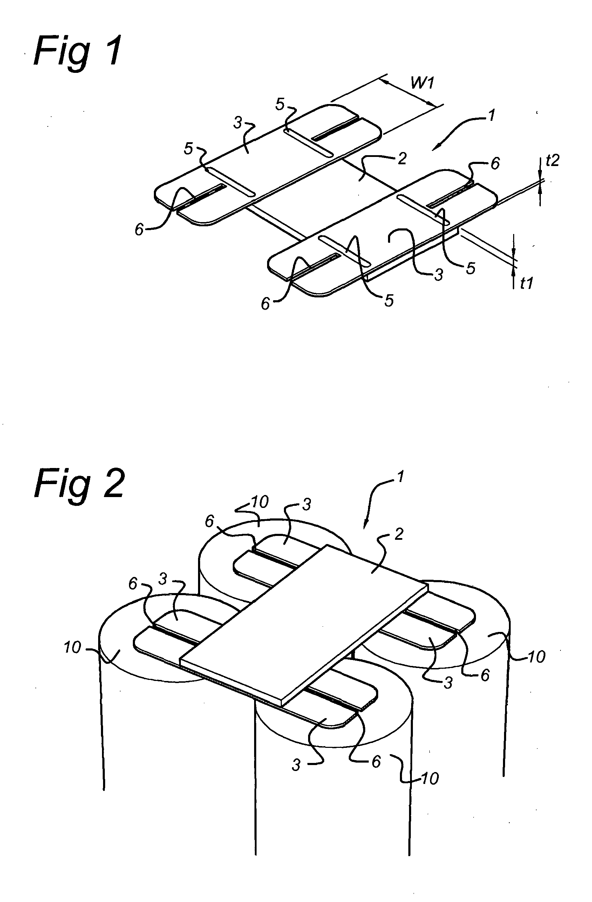

In Fig.1 a perspective top view is shown of a first embodiment of a connection assembly 1 according to the present invention, which can be used to electrically connect cells of a battery pack, in this case for connection four cells. Fig. 2 shows a perspective bottom view of the connection assembly 1 of Fig. 1, wherein four cells 10 are also shown partially in a cylindrical embodiment which can be used to form a complete four cell battery pack.

The connection assembly 1 comprises a first connector element 2 of a first material and, in the embodiment shown, two second connector elements 3 of a second material, the first material having a lower resistivity than the second material. The first connector element 2 and second connector elements 3 are electrically connected to each other by low resistance connections 5, as shown in the top view of Fig. 1. The first material is a low resistivity material, e.g. Cu or Ag (or mixtures thereof). Copper (Cu) has a resistivity of 1.68x10⁻⁸ Ωm. Other suitable first materials are e.g. Aluminum (2.65 x10⁻⁸ Ωm), Silver (1.59 x10⁻⁸ Ωm), Gold (2.2 x10⁻⁸ Ωm)l The second material is a material which can be electrically connected to a cell in a battery pack using modest temperature bonding techniques, such as Ni. Nickel (Ni) has a resistivity of 13.5x10⁻⁸ Ωm, allowing resistive welding techniques. Other materials which are suitable for welding (second material) are e.g. Ni201 (9.5 x10⁻⁸ Ωm), Iron (9.7 x10⁻⁸ Ωm), Brass (7.2 x10⁻⁸ Ωm) and Tungsten (5.5 x10⁻⁸ Ωm).

The first and second material of the first connector element 2 and (multiple) second connector elements 3 can be electrically connected to each other using e.g. resistance welding or laser welding. Alternative techniques that can be used are gluing or (tin) soldering. Temperatures used for making the electrical connections or weld lines 5 is only limited by the materials used, not by the material of the cells.

The first connection element 2 is used in the connector assembly 1 for providing a low resistance path between two cells in a battery pack. To obtain this, a thickness t₁ (see Fig. 2) of the first connector element 2 is more than 0.1 mm in an embodiment of the present invention, e.g. about 0.4mm or about 1.0mm thick.

In an exemplary embodiment, a connection assembly 1 is provided allowing connection of two cells 10. In contrast to the embodiment shown in Fig. 1 and 2, the first connection element 2 is then only provided between the low resistance connections 5, i.e. with a width similar to the width of second connection element 3. The first connection element 2 e.g. has a length of 40mm, width of 13mm and thickness of 0.4mm, and the weld lines 5 are 24mm apart in that case the resistance through the copper part (first connection element 2) between the two weld lines 5 is 0.0000775 ohm, and through the nickel part (second connection element 3) is 0.0006230 ohm.

The second connection element 3 is used in the connector assembly 1 for allowing an electrical connection to be made to the cell material in the battery pack. As battery packs are usually designed to have minimal dimensions, the second connection elements 3 are made as thin as possible. In an exemplary embodiment, a thickness t₂ (see Fig. 2) of the second connector element is less than about 0.4 mm.

The second connector element 3 comprises two or more apertures 6 which allow connecting the second connector element 3 to cells 10 of a battery pack. In the embodiment shown in Fig. 1 and 2, the apertures 6 have the form of slits, which allow good access to both the second connector element 3 and the cell 10 when e.g. using regular bonding machines, such as. point soldering machines (or alternatively resistance welding, laser welding). In further alternative embodiments, the apertures 6 are provided as holes, rectangles, or more complex shapes. The actual connection of the cell 10 to the second connector element 3 is chosen as close as practically possible to the weld line 5 of the connection assembly, as in that case a short as possible a path through the second material remains.

In order to obtain as low a resistance as possible between two cells connected by a connector assembly 1 according to the present invention, the low resistance connections 5 span substantially across a width w₁ of the second connector element 3 as shown in Fig. 1. In essence a parallel path is formed across the first and second connector elements 2, 3 between the low resistance connections 5. Most (substantially all) of the current between two cells will then flow through the low resistivity material of the first connection element 2 between the low resistance connections 5.

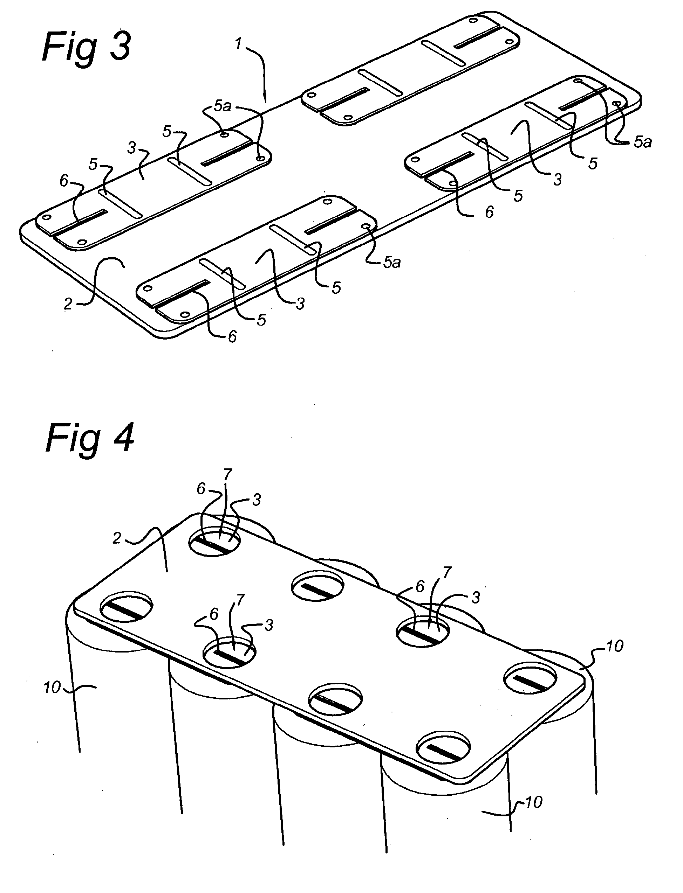

In Fig. 3 and 4 a top and bottom perspective view are shown, respectively, of a further embodiment of the connection assembly 1 according to the present invention, which allows to provide the parallel connection of eight cells 10 in a battery pack (the cells 10 being partially shown in Fig. 4).

In this embodiment the connection assembly comprises a single first connector element 2 and a plurality (four) of second connector elements 3. Each second connector element 3 is provided with two apertures 6 for connection to two cells. In order to provide a robust and reliable connection assembly 1, the second connector elements 3 are not only electrically connected to the first connection element 1 by the low resistance connection 5, but also further connected using additional connections 5a at extremities of the second connector elements 3.

As visible in the view of Fig. 4, the single first connector element 2 is provided with a number of secondary apertures 7 corresponding to the number of apertures 6 provided in the plurality of second connector elements 3. The secondary apertures 7 allow access to the apertures 6 for welding the second connector elements 3 to the cells 10.

In alternative embodiments, also second connector elements 3 may be used in a substantially square form, allowing connections to be made to four cells 10.

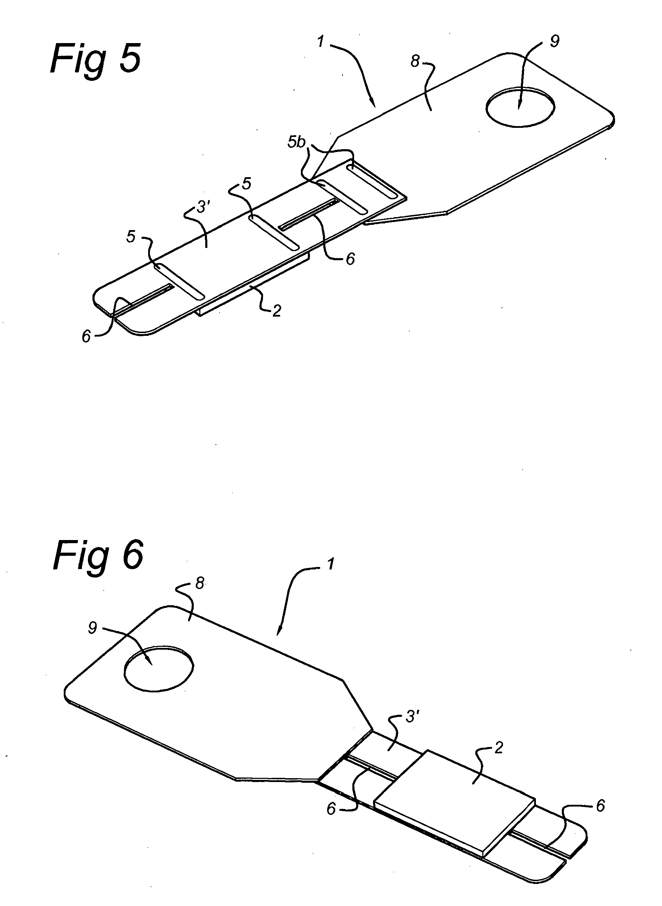

In Fig. 5 and 6 a top and bottom perspective view are shown, respectively, of an even further embodiment of the connection assembly 1 according to the present invention. This embodiment of the connection assembly allows to interconnect two cells 10 in a battery pack, and simultaneously provide for an external connection of the battery pack. The connection assembly 1 in this embodiment comprises a first connection element 2, connected to a second connection element 3 using low resistivity connections 5, similar to the embodiments of Figs. 1-2 and 3-4. In addition, the connection assembly 1 comprises an external connection element 8, also made of the first material (i.e. a low resistivity material such as Cu) connected to the second connector element 3 using further low resistivity connections 5b. In the embodiment shown in Fig. 5, two further low resistivity connections 5b are used, which also provide structural rigidity to the connection assembly 1. In the embodiment shown, the external connection element 8 is further provided with a hole 9, which allow for easy external connections, e.g. for soldering a wire to the battery pack.

In an even further embodiment, various embodiments and alternatives of the connection assembly 1 may be used simultaneously. E.g. four cells 10 may be connected in series in a small volume by positioning the cells 10 with opposing pole next to each other. The negative pole of a cell 10 is connected to the positive pole of an adjacent cell 10 using the alternative embodiment of Fig. 1 (two cell embodiment), thus using three connection assemblies 1 for the entire battery pack. For the first and last cell 10, an alternative of the Fig. 5 and 6 embodiment may be used having only a single cell connection (aperture 6), which provide the external positive and negative contact for the thus formed battery pack with four cells 10. Various battery packs may be assembled using the various embodiments described with reference to the figures 1-6 and alternative embodiments thereof as described herein. E.g. 2 cells 10 may be combined in a series or parallel configuration, but also in combined configuration, e.g. 4 cells is series, and two of such series in parallel, totaling 8 cells 10.

The connector assembly 1 according to the present invention embodiments as described above can be used in the manufacturing of battery packs having a much lower internal resistance than present day battery packs. In a further aspect, the present invention relates to a method for providing a battery pack comprising two or more cells. The method comprises providing a first connector element 2 (e.g. from a blank or sheet of Cu or Ag) and at least one second connector element 3 (e.g. from a blank or sheet of Ni). The second connector element 3 is provided with an aperture 6.

The method further comprises first connecting the first connector element 2 to the at least one second connector element 3 using a low resistance connection technique, thereby forming e.g. the low resistivity connections 5 as shown in the embodiments above. As no cells 10 or other battery pack elements are near at this stage, this connection step can be performed using all known types of connection techniques, including high temperature techniques such as resistance of laser welding. After this step, the method comprises connecting the apertures 6 of the at least one second connector element 3 to the two or more cells 10 of the battery pack. this step is performed using a low temperature connection technique, such as bonding, soldering, welding, fusing, etc. which provides no dangerous situation.

## Claims

1. Connection assembly for connecting two or more cells (10) in a battery pack, the connection assembly (1) comprising a first connector element (2) of a first material and a second connector element (3) of a second material,
the first material having a lower resistivity than the second material,
the first connector element (2) and second connector element (3) being electrically connected to each other by a low resistance connection (5), **characterized in that** the low resistance connection (5) is a weld line.

2. The connection assembly according to claim 1, wherein the first material is selected from the group comprising Ag, Cu, or mixtures thereof.

3. The connection assembly according to claim 1 or 2, wherein the second material is Ni.

4. The connection assembly according to any one of claims 1-3, wherein a thickness of the first connector element (2) is more than 0.1mm.

5. The connection assembly according to any one of claims 1-4, wherein a thickness of the second connector element (3) is less than 0.4 mm.

6. The connection assembly according to any one of claims 1-5, wherein the low resistance connection (5) spans substantially across a width of the second connector element (3).

7. The connection assembly according to any one of claims 1-6, wherein the second connector element (3) comprises two or more apertures (6).

8. The connection assembly according to claim 7, wherein the apertures (6) are slits.

9. The connection assembly according to any one of claims 1-8, comprising a single first connector element (2) and a plurality of second connector elements (3), each second connector element (3) being provided with two apertures for connection to two cells (10).

10. The connection assembly according to claim 9, wherein the single first connector element (2) is provided with a number of secondary apertures (7) corresponding to the number of apertures (6) provided in the plurality of second connector elements (3).

11. The connection assembly according to any one of claims 1-10, further comprising an external connection element (8), which is electrically connected to the second connector element (3) by a further low resistance connection (5).

12. Method for providing a battery pack comprising two or more cells (10), comprising
- providing a first connector element (2),
- providing at least one second connector element (3), the second connector element (3) being provided with an aperture (6),
- first connecting the first connector element (2) to the at least one second connector element (3)s using a low resistance connection technique, , and
- then connecting the apertures (6) of the at least one second connector element (3) to the two or more cells (10) of the battery pack, **characterized in that** using a low resistance connection technique comprises using a low resistance connection (5) in the from of a weld line.

## Patentansprüche

1. Verbindungsanordnung zum Verbinden von zwei oder mehr Zellen (10) in einem Akkumulator, wobei die Verbindungsanordnung (1) ein erstes Verbinderelement (2) aus einem ersten Material sowie ein zweites Verbinderelement (3) aus einem zweiten Material umfasst,
das erste Material einen niedrigeren spezifischen Widerstand hat als das zweite
Material,
und das erste Verbinderelement (2) und das zweite Verbinderelement (3) über eine niederohmige Verbindung (5) elektrisch miteinander verbunden sind,
**dadurch gekennzeichnet, dass** die niederohmige Verbindung (5) eine Schweißnaht ist.

2. Verbindungsanordnung nach Anspruch 1, wobei das erste Material aus der Gruppe ausgewählt wird, die Ag, Cu oder Gemische daraus umfasst.

3. Verbindungsanordnung nach Anspruch 1 oder 2, wobei das zweite Material Ni ist.

4. Verbindungsanordnung nach einem der Ansprüche 1-3, wobei eine Dicke des ersten Verbinderelementes (2) mehr als 0,1 mm beträgt.

5. Verbindungsanordnung nach einem der Ansprüche 1-4, wobei eine Dicke des zweiten Verbinderelementes (3) weniger als 0,4 mm beträgt.

6. Verbindungsanordnung nach einem der Ansprüche 1-5, wobei sich die niederohmige Verbindung (5) im Wesentlichen über eine Breite des zweiten Verbinderelementes (3) erstreckt.

7. Verbindungsanordnung nach einem der Ansprüche 1-6, wobei das zweite Verbinderelement (3) zwei oder mehr Öffnungen (6) umfasst.

8. Verbindungsanordnung nach Anspruch 7, wobei die Öffnungen (6) Schlitze sind.

9. Verbindungsanordnung nach einem der Ansprüche 1-8, die ein einzelnes erstes Verbinderelement (2) und eine Vielzahl zweiter Verbinderelemente (3) umfasst, wobei jedes zweite Verbinderelement (3) mit zwei Öffnungen zur Verbindung mit zwei Zellen (10) versehen ist.

10. Verbindungsanordnung nach Anspruch 9, wobei das einzelne erste Verbinderelement (2) mit einer Anzahl sekundärer Öffnungen (7) versehen ist, die der Anzahl von Öffnungen (6) entspricht, die in der Vielzahl zweiter Verbinderelemente (3) vorhanden sind.

11. Verbindungsanordnung nach einem der Ansprüche 1-10, die des Weiteren ein äußeres Verbindungselement (8) umfasst, das über eine weitere niederohmige Verbindung (5) elektrisch mit dem zweiten Verbinderelement (3) verbunden ist.

12. Verfahren zum Herstellen eines Akkumulators, der zwei oder mehr Zellen (10) umfasst, wobei es umfasst:
- Bereitstellen eines ersten Verbinderelementes (2),
- Bereitstellen wenigstens eines zweiten Verbinderelementes (3), wobei das zweite Verbinderelement (3) mit einer Öfffnung (6) versehen ist,
- zunächst Verbinden des ersten Verbinderelementes (2) mit dem wenigstens einen zweiten Verbinderelement (3) unter Einsatz einer Methode für niederohmige Verbindung, und
- dann Verbinden der Öffnungen (6) des wenigstens einen zweiten Verbinderelementes (3) mit den zwei oder mehr Zellen (10) des Akkumulators, **dadurch gekennzeichnet, dass** Einsatz einer Methode für niederohmige Verbindung umfasst, dass eine niederohmige Verbindung (5) in Form einer Schweißnaht eingesetzt wird.

## Revendications

1. Ensemble de connexion pour connecter au moins deux cellules (10) dans un bloc de batterie, l'ensemble de connexion (1) comprenant un premier élément de connecteur (2) d'un premier matériau et un deuxième élément de connecteur (3) d'un deuxième matériau, le premier matériau ayant une résistivité inférieure au deuxième matériau, le premier élément de connecteur (2) et le deuxième élément de connecteur (3) étant connectés électriquement entre eux par une connexion à faible résistance (5), **caractérisé en ce que** la connexion à faible résistance (5) est une ligne de soudure.

2. Ensemble de connexion selon la revendication 1, dans lequel le premier matériau est sélectionné à partir du groupe comprenant Ag, Cu ou leurs mélanges.

3. Ensemble de connexion selon la revendication 1 ou 2, dans lequel le deuxième matériau est Ni.

4. Ensemble de connexion selon l'une quelconque des revendications 1 à 3, dans lequel une épaisseur du premier élément de connecteur (2) est supérieure à 0,1 mm.

5. Ensemble de connexion selon l'une quelconque des revendications 1 à 4, dans lequel une épaisseur du deuxième élément de connecteur (3) est inférieure à 0,4 mm.

6. Ensemble de connexion selon l'une quelconque des revendications 1 à 5, dans lequel la connexion à faible résistance (5) s'étend sensiblement sur une largeur du deuxième élément de connecteur (3).

7. Ensemble de connexion selon l'une quelconque des revendications 1 à 6, dans lequel le deuxième élément de connecteur (3) comprend au moins deux ouvertures (6).

8. Ensemble de connexion selon la revendication 7, dans lequel les ouvertures (6) sont des fentes.

9. Ensemble de connexion selon l'une quelconque des revendications 1 à 8, comprenant un unique premier élément de connecteur (2) et une pluralité de deuxièmes éléments de connecteur (3), chaque deuxième élément de connecteur (3) étant pourvu de deux ouvertures pour la connexion à deux cellules (10).

10. Ensemble de connexion selon la revendication 9, dans lequel l'unique premier élément de connecteur (2) est pourvu d'un nombre d'ouvertures secondaires (7) correspondant au nombre d'ouvertures (6) fournies dans la pluralité de deuxièmes éléments de connecteur (3).

11. Ensemble de connexion selon l'une quelconque des revendications 1 à 10, comprenant en outre un élément de connexion externe (8), qui est connecté électriquement au deuxième élément de connecteur (3) par une autre connexion à faible résistance (5).

12. Procédé pour fournir un bloc de batterie comprenant au moins deux cellules (10) comprenant
- la fourniture d'un premier élément de connecteur (2),
- la fourniture d'au moins un deuxième élément de connecteur (3), le deuxième élément de connecteur (3) étant pourvu d'une ouverture (6),
- en premier, la connexion du premier élément de connecteur (2) à l'au moins un deuxième élément de connecteur (3) en utilisant une technique de connexion à faible résistance, et
- ensuite, la connexion des ouvertures (6) de l'au moins un élément de connecteur (3) aux au moins deux cellules (10) du bloc de batterie, **caractérisé en ce que** l'utilisation d'une technique de connexion à faible résistance comprend l'utilisation d'une connexion à faible résistance (5) sous la forme d'une ligne de soudure.
